# EUROPEAN PATENT APPLICATION

(11) **EP 2 008 843 A1**
(43) Date of publication of application: **31.12.2008**
(21) Application number: 07425395.6
(22) Date of filing: 28.06.2007
(51) Int. Cl.: B60J 5/04, B60J 10/00

(54) **A frame-movable frame assembly for motor homes (habitable motor vehicles) and mobile homes (habitable trailers)**

(71) Applicant: Bazzani, Maria Giovanna, 50026 San Casciano V.P. (FI) (IT)
(72) Inventor: Bazzani, Maria Giovanna, 50026 San Casciano V.P. (FI) (IT)
(74) Representative: Mannucci, Michele

(57) **Abstract**

Elastically yielding gaskets to seal the components to the respective panels when closed, are created in situ with materials of the type called GASKETING, of liquid or semi-liquid polyurethane, silicone or the like, automatically distributable by extrusion using a specific robot or numerically controlled machine with Cartesian movements.

## Description

Gaskets currently used to create seals between the frame and the wall in which the seat for the frame is produced and between the movable frame and the respective panel connected to said movable frame, are provided with specific edging strips, which must be applied along the specific seats provided for them in the respective metal components. These operations are difficult and costly, and must be performed by specialized personnel. Moreover, the abutments between the ends of the gaskets are also somewhat precarious.

The invention fully solves the problem, even to the extent that the operation can be robotized, without or with almost no manual operations, as will be apparent from the text below.

According to the invention, the frame-movable frame assembly for motor homes (habitable motor vehicles) and mobile homes (habitable trailers) provides for elastically yielding gaskets which are created in situ by casting or extrusion with materials of the type called GASKETING, of liquid or semi-liquid polyurethane, silicone or the like.

These gaskets are dispensed with bicomponents suitable metered to obtain drawing of the material forming the gaskets in conditions such as to take the desired form and obtain the desired penetration in the spaces to be sealed.

Application can be implemented with the aid of robotized equipment, which simplifies and regularizes application.

The drawing shows an embodiment of the invention.

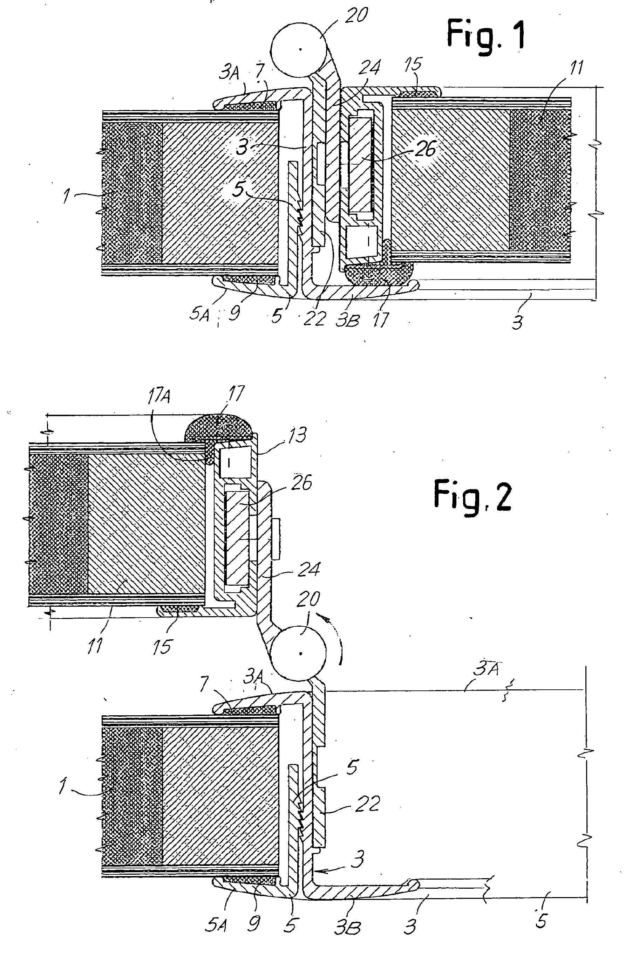

Figure 1 is a local section of a wall and of a movable frame at the level of a hinge, in the position arrangement; and
Figure 2 is analogous to Figure 1, but shows the components in the open position.

In the drawing the number 1 indicates a wall panel, which is engaged between two frames 3 and 5, coupled through elastic forcing of the inner frame 5 inside the outer frame 3, coupling being guaranteed by the sawtooth shapings 7 produced in the two frames and cooperating in the forcing.

The seal between the panel 1 and the two frames 3 and 5 is guaranteed, without using a preformed gasket applied to the frames with suitable joins, by providing in each of the two wings 3A and 5A a seat in which there is created a gasket 7 and 9 respectively, by casting substantially liquid bicomponent polyurethane dispensed by extrusion to form the gasket in situ. The two gaskets 7 and 9 are pressed on the surface of the wall 1 with coupling of the two frames 3 and 5. The frame 3 has a wing 3B projecting to offer support to the gasket between the wall and the panel or movable frame.

The number 11 indicates a movable panel or movable frame to which a perimeter frame 13 is conventionally fastened, in particular using metal plates and screws. Gaskets must be provided between the frame 13 and the panel 11. A gasket 15 is formed in situ in the aforesaid manner inside a seat analogous to those for the gaskets 7 and 9. A gasket 17 for sealing the movable frame or panel 11 in the closed position on the wing 3B of the frame 3, is also produced in situ with the shaping indicated in the drawing, by extrusion and with a suitable formulation of the bicomponent to allow both external shaping of the gasket and limited penetration of the material of the gasket inside the space between the edge of the panel 11 and the frame 13, as indicated in 17A.

The aforesaid gaskets are produced with the technique known as gasketing.

The two structures described above are articulated with hinges 20, comprising a part 22 for application to the frame 3 and a part 24 for application to the frame 13. The parts 24 are engaged with the frame 13 in an adjustable manner, for adjustment of the door, with the use of damping screws which engage with square nuts 26 susceptible to slide along the side of the frame to be articulated.

The part 22 of each hinge 20 is fastened to the frame 3. Advantageously, this fastening can be implemented with the technique called clinching, with punches, for example of a diameter in the order of 2 mm, which deform the material of the part 22 to make it penetrate the depth of the edging strip of the frame 3. In this manner perforation or riveting can be avoided.

With the arrangement defined above numerous and appreciable advantages are achieved. In the first place better performance of the gasket is guaranteed, as infiltrations between the gasket and the surface of the frame are avoided, as the gasket is welded to the edge of the frame with extrusion; moreover, the gasket is continuous, i.e. without joins. Imperfections, which can occur when the gasket is applied manually, by operators who are not always qualified, are avoided. It is also possible, as already indicated, for application to be automated or robotized, also with the use of a numerically controlled machine with Cartesian movements or the like. The components of the frames also require simpler structures.

## Claims

1. A frame-movable frame assembly for motor homes (habitable motor vehicles) and mobile homes (habitable trailers) and the like, wherein elastically yielding gaskets are created in situ with materials of the type called GASKETING, of liquid or semi-liquid polyurethane, silicone or the like.
